Europäisches Patentamt

European Patent Office

Office européen des brevets

(19)

(11) **EP 0 333 306 B1**

(12) # EUROPEAN PATENT SPECIFICATION

(45) Date of publication and mention
of the grant of the patent:
**15.10.1997 Bulletin 1997/42**

(51) Int Cl.6: **G06F 7/48**, G06F 7/544,
G06F 9/38

(21) Application number: **89201327.7**

(22) Date of filing: **11.12.1984**

(54) **Single chip integrated circuit digital signal processor with a slow or fast mode of operation**

Integrierter Einchip-Prozessor für die Verarbeitung von digitalen Signalen entweder in einem schnellen oder einem langsamen Betrieb

Processeur intégré sur un seul chip pour le traitement de signaux numériques selon un mode rapide ou lent

(84) Designated Contracting States:
**DE FR GB IT**

(30) Priority: **27.12.1983 NL 8304442**

(43) Date of publication of application:
**20.09.1989 Bulletin 1989/38**

(62) Document number(s) of the earlier application(s) in accordance with Art. 76 EPC:
**84201831.9 / 0 154 051**

(73) Proprietor: **Philips Electronics N.V.**
**5621 BA Eindhoven (NL)**

(72) Inventors:
- **van Wijk, Franciscus Johannes Antonius**
  **NL-5656 AA Eindhoven (NL)**
- **van Meerbergen, Jozef Louis**
  **NL-5656 AA Eindhoven (NL)**
- **Welten, Fransiscus Peter Johannes Mathijs**
  **NL-5656 AA Eindhoven (NL)**
- **Sluijter, Robert Johannes**
  **NL-5656 AA Eindhoven (NL)**

(74) Representative: **Peters, Rudolf Johannes et al**
**INTERNATIONAAL OCTROOIBUREAU B.V.,**
**Prof. Holstlaan 6**
**5656 AA Eindhoven (NL)**

(56) References cited:
**US-A- 4 075 704**          **US-A- 4 287 566**

- **PROCEEDINGS OF THE NATIONAL ELECTRONICS CONFERENCE, vol. 29, 16,17,18 October 1974, pages 416-421, New York, US; P.E. BLANKENSHIP et al.: "LSP/2 programmable signal processor"**
- **PROCEEDINGS OF THE FALL 1979 COMPCON-CONFERENCE, Washington, D.C., 4th - 7th September 1979, pages 287-290, IEEE, New York, US; T. SAKAO et al.: "A single- chip 4-bit microcomputer: MN1500 series"**
- **ELECTRONIC DESIGN, vol. 28, no. 4, February 1980, pages 86-89, St. Rochelle Park, US; D.F. MILLET: "A signal processor fast enough to do real-time voice-band"**

## Description

The invention relates to a single chip integrated circuit digital signal processor.

A data processor of this kind is known from US-A-4 075 704. The known device is a processor wherein, at each cycle, a plurality of floating point operations may be selectably carried on in a simultaneous, pipelined manner under control of a single instruction.

The invention is defined as claimed in claim 1.

Preferably, there are provided timing means for controlling a first instruction cycle which comprises the following coincident operations:

- address calculation for a data memory, including associated memory access, in order to make an operand for the bus connection means available during the next instruction cycle;
- a data transport via at least one bus of the bus connection means; and
- a data processing operation in at least either the arithmetic and logic unit or the multiplier element on an operand transported via the bus connection means during said instruction cycle in order to form a result operand during this instruction cycle which is made available for transport via the bus connection means during the next or a later instruction cycle. A given degree of parallellism can thus be achieved within one instruction cycle.

Preferably, there is provided a cycle selector which comprises a first state and a second state in order to control in the first state said first instruction cycle and in the second state a second instruction cycle having a length which amounts to half the length of the first instruction cycle, said second instruction cycle comprising the following coincident operations:

- address calculation for a data memory for the formation of an address for the next instruction cycle;
- memory access in a data memory by means of an address calculated during the directly preceding instruction cycle in order to make an operand available for the bus connection means in the next instruction cycle;
- a data transport via at least one bus of the bus connection means;
- a data processing operation in at least one of the two elements arithmetic and logic unit and multiplier element on at least one operand transported via the bus connection means during said instruction cycle or during a previous instruction cycle in order to form a result operand during the interval of the same instruction cycle puls the next instruction cycle in order to make this operand available for transport via the bus connection means during the second next instruction cycle or during a later instruction cycle, for which purpose output registers are connected to the multiplier element, and to the first read-write memory, said output registers being transparently activatable in said first state of the cycle selector, there being provided input registers for the arithmetic and logic unit and the multiplier element which are transparently activatable in both states of the cycle selector. By the interjection of the additional registers, uncoupling takes place so that the signals on the input thereof (result of an operation) are uncoupled from the signals on the output of these registers (result of a preceding operation). Due to this uncoupling, a higher processing speed can be achieved without a faster technology being required or a higher clock pulse frequency being used. The processing speed is also increased by extension of the parallel pipe-lining principle as will be explained in detail hereinafter. It is a minor drawback, however, that programming is now slightly more complex because each instruction word must contain elements of operations whose further execution is controlled only by later instruction words.

Some further attractive details are specified in the sub-claims.

Brief description of the figures:

The invention will be described in detail hereinafter with reference to the drawings. First a description will be given of a general block diagram of a preferred embodiment, followed by a description of some detailed diagrams and operations,

Fig. 1 shows a general block diagram of a data processor in accordance with the invention;
Fig. 2 illustrates the four types of instructions which can be executed;
Fig. 3 shows a time diagram for the execution of a standard instruction in a normal cycle;
Fig. 4 shows a time diagram for the execution of a standard instruction in an accelerated cycle;
Fig. 5 shows a block diagram of an address calculation unit;
Fig. 6 illustrates the set of instructions of an address calculation unit;
Fig. 7 illustrates the shift/reformatting unit;
Fig. 7a shows the functions to be realized therein;
Fig. 8 illustrates the arithmetic and logic unit;
Fig. 9 illustrates the local processing memory;
Fig. 10 illustrates the serial data output;
Fig. 11 illustrates the serial data input;
Fig. 11a illustrates the parallel data input/output;
Fig. 12 illustrates the program status register;
Figs. 13a, b, c, d illustrate a part of the instruction code;
Figs. 14,14a illustrate the multiplier element;

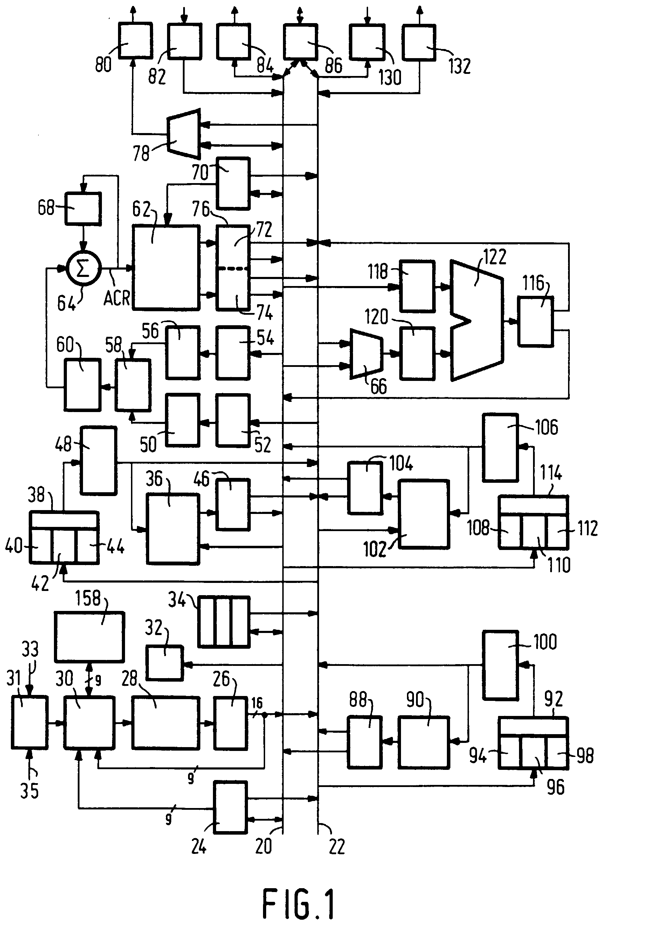

Fig. 1 shows a general block diagram of the data processor in accordance with the invention. The internal connection is realized by a first 16-bit data bus 22 and a second 16-bit data bus 20. The circuit comprises a number of registers, some of which are directly connected to one of the two buses, that is to say elements 24, 26, 34, 46, 48, 50, 56 (the latter two elements via a selection element). 70, 72, 74, 88, 100, 104, 106, 118, 120, 124, 126. Element 30 is a program counter which addresses a program memory 28 having a capacity of 512 words of 40 bits which can be loaded into the output register 26. The execution of these instructions will be described in detail hereinafter: most bits control further functions in the remainder of the circuit via connections/decoders which have been omitted for the sake of simplicity. A 16-bit portion can be applied in parallel to both data buses for one type of instruction. Program counter 30 can be loaded either with 9 bits from the instruction register 26 or with an address from an 8-word stack register 158. The register 24 acts as an interrupt address register and is asymmetrically connected between the two buses (i.e. in the same manner as elements 34, 70, 78 to be described hereinafter: unidirectionally to the bus 22, bidirectionally to the bus 20). This restriction is not essential; for a long instruction word, the number of different functions to be controlled would be larger so that a more universal connection pattern would be feasible. If desired, the memory 28 is not integrated but constructed as a "separate" memory in order to facilitate the programming; in that case forty additional pins are added to the integrated circuit in order to supply the instruction register 26 with information. Preferably, at least 9 of these forty pins are bidirectionally operative for the supply of an address to the external memory. In a specific embodiment (not shown), the latter number is chosen to be 16, so that the width equals that of the data buses. These forty connection pins operate in time multiplex: alternately address and data.

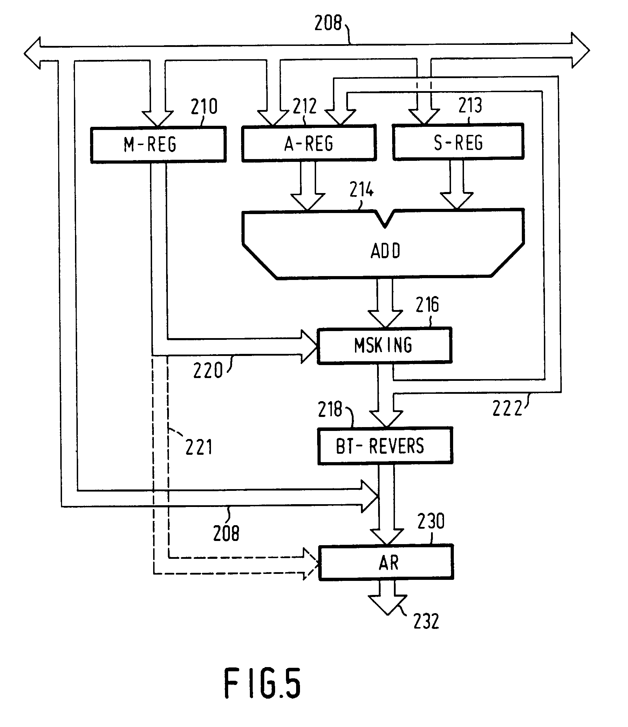

Element 90 is a data memory which is constructed as a read-only memory for 512 words of 16 bits in the present embodiment. If desired, the memory 90 is not integrated but constructed as a "separate" memory in order to facilitate programming; in that case sixteen additional pins are included in the integrated circuit for the supply of information to element 88. Nine of these 16 pins are bidirectionally operative for the supply of an address to the external memory. They are again operative in time multiplex. Furthermore, elements 36, 102 are data memory modules, elements 38, 92, 114 are address calculation units, and elements 66, 78 are selectors for the two buses. Registers 48, 100, 106 are associated with the address calculation means which will be described in detail with reference to Fig. 5. Furthermore, as is apparent some registers (for example, 88, 104 46, 72, 74, 34) have selective connections to the two buses. Registers 50, 56 operate as registers which are or are not transparent Element 58 is a 16 x16 bit multiplier element with an associated control register 70. Element 64 is a 40-bit accumulator adder. Element 68 is a 40-bit accumulator register. Element 78 is a bidirectional selector. Element 122 is an arithmetic and logic unit. Element 116 is memory comprising 3 connections (ports) which is used as a set of scratchpad or processing memories. Furthermore, element 128 is an input/output control element and elements 80, 82, 84, 86, 130, 132 are input/output units for communication with the environment.

The registers have the following functions:

| | |
|---|---|
| 24 : | instantaneous address register for RAM 36 (ARA) |
| 46 : | data register connected to the output of RAM 36 (DRA) |
| 106 : | instantaneous address for RAM 102 (ARB) |
| 104 : | data register connected to the output of RAM 102 (DRB) |
| 50, 56 : | two registers, transparent or not, which are connected to the inputs of the multiplier element. During a machine cycle, either the signal arriving on the input appears on the output of the relevant register (transparent) or the signal present in the register itself appears thereon (not transparent). At the end of such a cycle, the signal then present on the input of the register (MXL, MYL) is always stored in the register. |
| 60 : | product register (PR) |
| 68 : | accumulator register (ACR) |
| 72/74 : | register sections for the most-significant and the least significant product portion (MSP, LSP) |
| 70 : | register for the control of the shift element 62 as regards the shifting and the format selection and possibly bit reversal (BSR) |
| 118, 120 : | two registers which operate transparently or not and which are connected to the input of the ALU 122 (AXL, AYL) |
| 116 : | fifteen scratchpad registers (R0 ... R14), also representing an accumulator function; physically, this element acts as a memory having three independent access facilities with as many independent addresses and two data outputs and one data input |
| 40, 94, 108 : | basic address registers (AA, RA, BA) |
| 42, 96, 110 : | shift address registers (AS, RS, BS) |
| 44, 98, 112 : | address masking registers (AM, RM, BM) |
| 84, 130 : | serial output registers for the two buses (SOX, SOY) |
| 82, 132 : | serial input registers for the two buses (SIX, SIY) |

86 :        multiplexed parallel input/output register (PO, PI)
80 :        additional parallel output register (ADO).

Functional description:

Synchronized by a clock which is not separately shown, the data processor is capable of executing up to 10 million instructions per second. This is achieved in that several instructions can be executed in parallel by way of a pipeline organization. The two parallel operating data buses are operative to accelerate the transport. Communication with the environment is provided by powerful I/O interface units for serial as well as parallel communication. There are provided three data memories, that is to say two read-write memories and one read-only memory, each comprising its own address calculation unit. The arithmetic and logic unit 122 has a set of instructions yet to be described. The multiplier element 58 is combined with a 40-bit accumulator 64/68 and a general purpose shift unit 62.

The inventors have recognized the fact that in some cases it will be advantageous for one or both buses to have a larger bit width, for example 24 bits. In some cases it will not be necessary to connect all elements to all 24 bit lines. Depending on the circumstances, for given elements this may be restricted to 16 or even 12 bits. furthermore, in order to save components it will in some cases be permissible to combine the addressing unit of a (read-only) memory and a data memory.

Summary of the instruction set.

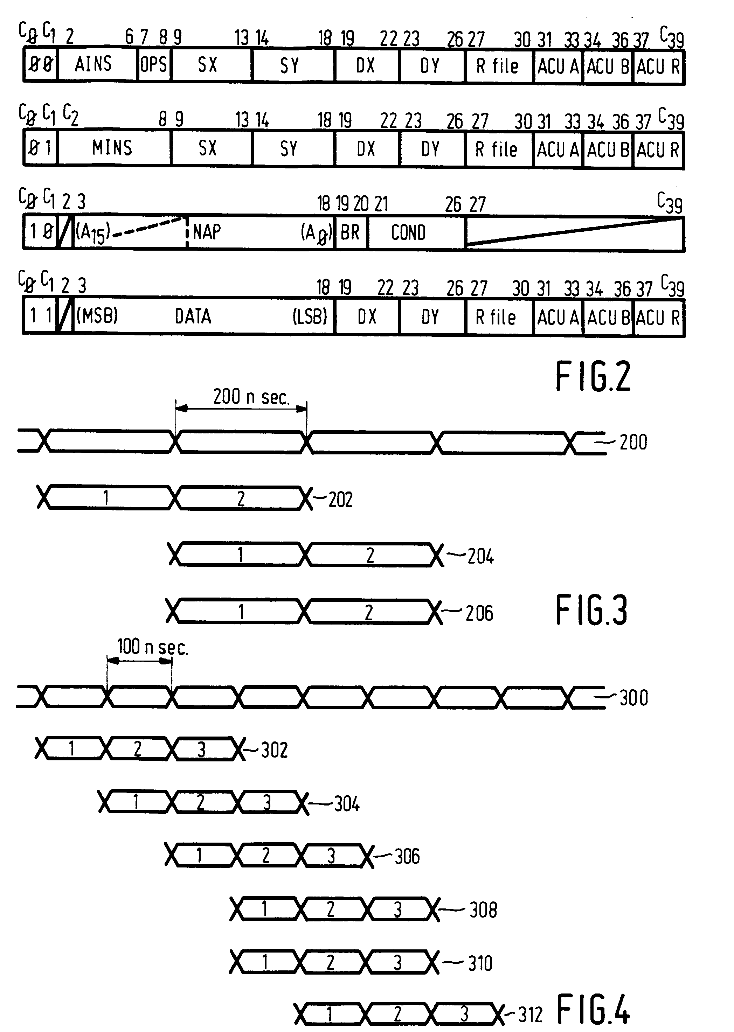

Fig. 2 illustrates the four types of instructions which can be executed. The first two bits indicate the type The first arithmetic instruction controls in parallel an operation in the arithmetic and logic unit, a bus transport via at the most two buses, and at the most three address calculations. The second arithmetic instruction is the counterpart of the first instruction and controls an operation in the multiplier element. The field AIIS/OPS or MINS controls the operation, SX/DX or SY/DY controls the source elements or destination elements on the two buses, respectively, RFILE acts as an address for the local memory 116, and ACUA, ACUB, ACUR are operative or the control of the address processing elements.

In the third instruction, the branch instruction, the bits 3 to 18 contain a destination address for the branch. BR indicates the type of brach instruction and COND the condition. The bit positions 2 and 27 to 39 are void. Alternatively, also this instruction may contain the ACU fields recited hereabove, are now also included in these fields in this particular operating mode.

In the fourth instruction, direct loading, the field DATA indicates the data to be transported on the bus, and the other fields are operative as in the arithmetic instructions. The details of these instructions will be described hereinafter.

Under standard conditions each one-word instruction can be executed in 200 ns. With a given program control this can be reduced to 100 ns. This is achieved by elaboration of the pipeline priciple as will be described in detail hereinafter. In this respect Fig. 3 shows a time diagram of a standard 200 ns instruction cycle. The time diagram of an accelerated instruction cycle as shown in Fig. 4 will be described herinafter. Line 200 in Fig. 3 contains the sequence of instruction time intervals having a length of 200 ns. Crossing lines indicate the connections to preceding/subsequent intervals. Line 202 shows the operations for the fetching of operands. Block 1 offers time space for any calculation of a read address. Due to the organization of the separate memories 36, 102 and 90, this can be performed in an arbitrary combination of these three memories (possibly even in all three memories simultaneously). Furthermore, the relevant memory is read. In as far as a memory serves to supply an operand, in interval/block 2 the information on this line of the relevant location of this memory is valid on the output. On line 204 the processing of the data is symbolized. Block 1 offers time space for the transport of the data on one of the two (or both) transport buses and, whenever applicable, for the actual processing in the multiplier element and/or the arithmetic and logic unit. In given circumstances, however, such an operation will not be activated, for example when only a register to register transfer is performed. During block 2 on this line, any data thus obtained is valid on the output of the relevant processing element. Line 206 shows the further output of the data thus formed. Block 1 thereof offers space for the calculation of an address in one of the two (or both) read-write memories. Block 2 offers time space for the transport via one or both buses 20, 22, possibly to a read-write memory; to this end, an address is then calculated in block 1 of line 206. Thus, between the beginning and the end of an instruction there are three blocks of 200 ns. During the second one of these blocks, however, an address calculation can already be performed for the next instruction. During the third block of this cycle, the processing (multiplier element cum accumulator and/or arithmetic and logic unit) can already be performed for the next instruction. During the execution of an instruction in the described manner, the bit FOR in the program status register PST in the element 34 has the value "0". A second, faster operating mode will be described later.

Detailed description of the sub-systems:

1) Program memory 28

This memory is addressed by the program counter 30. This counter has the incrementation function (address +1) and the "constant" function (address not modified). Furthermore, the following functions can be performed:

- a CALL instruction
- a JUMP instruction
- a RETURN instruction.

The program counter 30 is controlled by the control unit 31 which comprises a reset input 33 and an interrupt input 35. The state is co-controlled by :

- register 32 which indicates an instruction repeat:
- register bank 34 which contains condition information in register PST for said instruction categories, and also instruction cycle information (FQR) and information concerning the permissibility of interrupts.

These registers 32, 34 can be loaded (34 may also serve as a data source) from the bus 20; therefore, they are asymmetrically connected to both buses.

The actual program counter 30 (9 bits) fulfills the following functions:

- in response to the fetching of each instruction form the memory 28 to the instruction register 26, the program counter is incremented. Upon execution of one of the subsequent, conventional instructions, the value of the address field is transferred as a new address to the program counter:

     jump instructions (if feasible)
     call instructions (if feasible).

For the latter (call) instructions, the content of the program counter is written in the upper register of the stack (8) of registers 158 after incrementation by +1. When a return instruction is executed, the content of the uppermost register of the stack is transferred to the program counter. The interrupt address from the register 24 is transferred to the program counter when the interrupt bit ($\overline{INT}$) on input 35 gets value 0 while the interrupt is permitted in that the relevant enable bit IE of the register PST has the value "1" and the value of the program counter content incremented by 1 is written on the uppermost stack register.

The register stack comprises 8 registers of 9 bits in a last-in-first-out organization, so that a nested structure of at the most 8 levels is permissible among the subroutines/interruptions.

2) The data memory modules 36, 102, 90.

The read-only memory 90 has a capacity of 512 words of 16 bits each; the other two modules each have a capacity of 256 words of 16 bits each. The address lengths amount to 9 bits and 8 bits, respectively. The data inputs of the memories 36, 102 are asymmetrically connected to the buses 20, 22. Via selectors, the data outputs are symmetrically connected to the buses, the data being transported via either one or both buses as desired. When the described slow instruction cycle is activated, the output registers 46, 88, 104 are continuously transparent.

3) Address calculation units.

The address calculation units 38, 92, 41 of the present embodiment are identical, except for their word length of 8 bits and 9 bits, respectively. The address calculation can be coexistent with two arithmetic/move instructions and the load immediate instruction; the address calculations can thus be equickly executed.

The block diagram of such an address calculation unit shown in Fig. 5 comprises the bus 208 (one of the two buses 20, 22 in Fig. 1) and also all elements up to the connection 232 for the actual memory matrix cum address decoder. At the input side there are provided three registers

210 :    for the address mask;
212 :    for the actual address where the calculation starts;
213 :    for the shift (offset).

The content of these three registers can be retained at the beginning of an interrupt operation for later use during a further operation. Element 214 is an arithmetic and logic unit having a limited bit width and a limited range of operations (with respect to element 122 in Fig. 1). The element 206 is a masking element in which the calculation result of the element 214 can be bit-wise conducted or blocked by the content of the masking register 210. The output of the masking element 216 is connected to the A register 212. Furthermore, in the reversing element 218 the bit sequence can be reversed. The result from the element 218 can be stored in the actual address register 230. The latter register can also be filled directly by data on (a part of) the lines of the 16-bit bus. The masking in the element 216 can be used for cyclically passing through the addresses according to a given modulo value; the reversal of the bit sequence is used in given versions of Fourier transform calculations. When a masked value ("0") is received in the modulo register 210, the relevant bit position in the register 230 remains unmodified. However, when a value ("1") is received in the modulo register 210, the relevant bit position 230 is updated with a new value. In given circumstances the relevant position may have been the subject of a reversing operation. The control of the register 230 in this respect is denoted by a dotted connection. Actually there is provided a control unit which controls the operations described hereinafter.

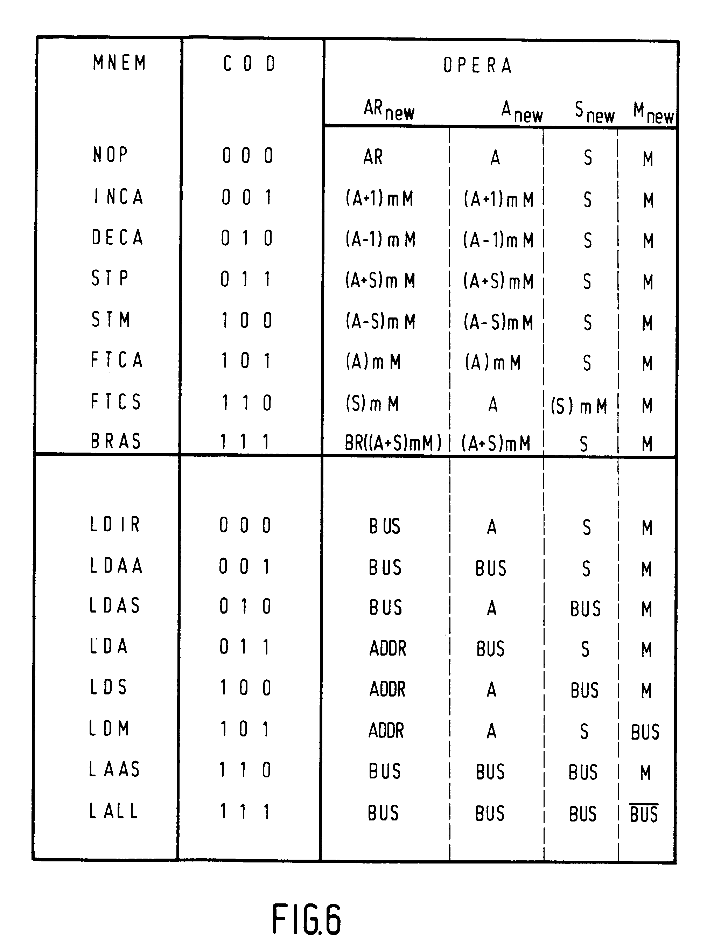

In this respect Fig. 6 shows the set of instructions of the address calculation units. They are controlled by relevant fields in the instruction word: C31-33 for the element 38, C34-36 for the element 114, C37-39 for the element 92 (this word is present in the already described register 26). Fig. 6 is divided into two halves; the upper half is applicable when the relevant unit has not been selected as the data destination under the control of the fields DX and/or DY of the micro-instruction word to be described hereinafter. In the opposite case the lower half of the Figure is applicable. The first column shows the mnemonics, the second column the bit pattern, the third to sixth columns the new content for each of the four registers 230, 212, 213, 210 for which "BUS" means that the register is filled with new data from the bus. (A+1) mM means that the address (A+1) is masked by the content of the masking register M; correspondingly, for example, for A-1, A+S and so on. "BR" means that the bit sequence is reversed. The instruction LALL means that the content of the bus (in as far as supplied) is bit-wise inverted. During the loading of the relevant address calculation unit, with or without an "immediate load" instruction, the content of the M register 210 does not influence the actual loading of the AR register 230, The bit positions are not reversed either in that case.

4) The multiplier element 58.

Multiplication is performed completely in parallel in accordance with the Booth's algorithm described in "A signed binary multiplier technique", by A.D. Booth, Q. J. Mech. Appl. Math. 4 (1951), 236-240, and modified as published inter alia in "A proof of the modified Booth's algorithm for multiplication", by L.P.Rubinfeld, IEEE Trans.Computers (October 1976), pages 1014-1015. From two 16-bit operands on the outputs of the registers 50, 56 a 32-bit product word is formed in one machine cycle. The multiplier element is constructed so that the most significant bit is operative as having a negative value (sign bit). During the processing of operands in multiple precision the less significant parts thereof, therefore, do not comprise a sign bit and the leading bit position must always be filled with a zero. This suppletion itself is described in the previous, non-published Netherlands Patent Application 8304186 (PHN 10 865) in the name of Applicant which is incorporated herein by way of reference.

To the output of the element 58 there are connected an accumulator adder 64 and an accumulator register 68, both elements having a width of 40 bits. If necessary, the sign bit in the register 60 (most significant bit of a product) is copied on more-significant bits until a total number of 40 bits is reached. Furthermore <u>two</u> flag bits are provided in the program status register PST in the element 34 (alternatively, this number is increased)

    a) when the permissible limits of the value range are exceeded, an overflow bit OVFL1 is made. The relevant logic function is an EXCLUSIVE-OR function between the two most significant bits of the forty-bit accumulation/adding result.

    b) a second status bis SGNM indicates the sign of the accumulation result. The relevant logic function is an EXCLUSIVE-OR function between OVFL and the most significant bit but one of the accumulation/adding result.

If OVFL obtains the value "1" due to an arithmetic instruction, the bits OVFL, SGNM are fixed. They can then be modified only by program control, for example in that the content of the program status register in the arithmetic and logic unit is subjected to a modification operation. For as long as the bit OVFL retains the value "0", both status bits are interrogated after each arithmetic instruction used by the accumulator. The accumulation result is stored in the register 66 and applied to an element 62 for shift, extraction and reformatting operations. The output of the accumulator register 68 is fed back to the accumulator/adder 64.

5) Shift element 62.

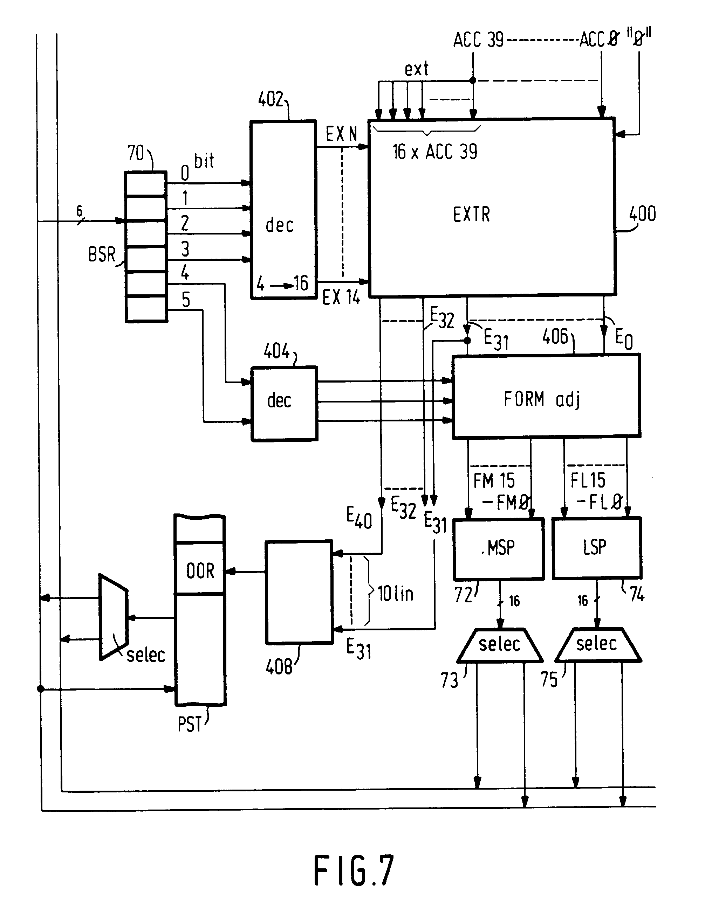

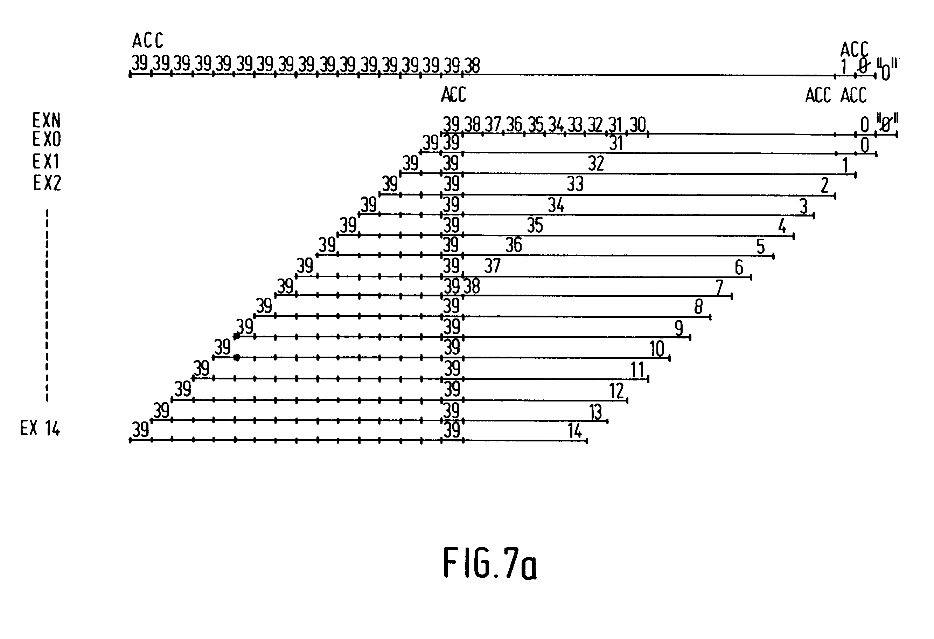

Fig. 7 illustrates the shift element 62 in which reformatting operations are also performed. At the top of the Figure, the 40 bits arrive from the accumulator/adder 64. The sign extension operation is included in order to avoid an overflow condition as much as possible. This condition arises when the sum becomes too large due to addition of a number of successive numbers having the same sign. This risk is now reduced. On the input of the extractor 400 the most significant bit ACC39 is extended to fifteen more significant bit positions; this again is done for the detection of any overflow conditions. In the shift element 400 a 32-bit (double length) word is extracted from the 55 bits thus received. An operation can thus be performed with double the precision. At the left of the Figure there is shown a register (70) BSR which contains a four-bit code (bit 0...3). This code is decoded by the decoder 402. In this respect Fig. 7a shows the sixteen different extraction possibilities; the accumulator bits are supplemented by a least significant "0". Thus, the bits BSR Ø ... 3 with the codes 0000 ... 1111 form sixteen staggered extracts of 32 bits each. The register 70 should be filled at least one instruction cycle before the actual extraction operation. The bits BSR 4, 5 are decoded by the decoder 404 which activates the reformatting device 406. The 32 extracted bits are referred to as E31 ... E0. The values of the bits BSR4, 5 control the following reformatting operation :

ØØ :     the extraction 32-bit word is available to a user in the form of two half words;

1Ø :     the most significant bit of the least significant half word becomes "Ø" and the remainder is shifted one position in the less-significant direction; the last bit of the extraction result is thus suppressed;

Ø1 :     as ØØ, but the bits of the least significant half word are reversed. The elements 72, 72 are registers; the selection on the output thereof to the two buses is now denoted by separate selectors 73, 75 (not in Fig. 1). In addition to the 32 bits to be applied to the element 406, the extractor 400 also applies 9 more significant bits E31 ... E40 to the detector 408 which forms an over-flow detector (and also receives bit E31). Should an inadmissible bit value (differing from E31) occur among these 9 bits, bit OOR in the program status register is set to "1"; this is because the relevant more significant bits must be repeats of the sign-indicating bit E31. The field MINS in the instruction which controls functions will be described in detail hereinafter.

6) The ALU unit 122.

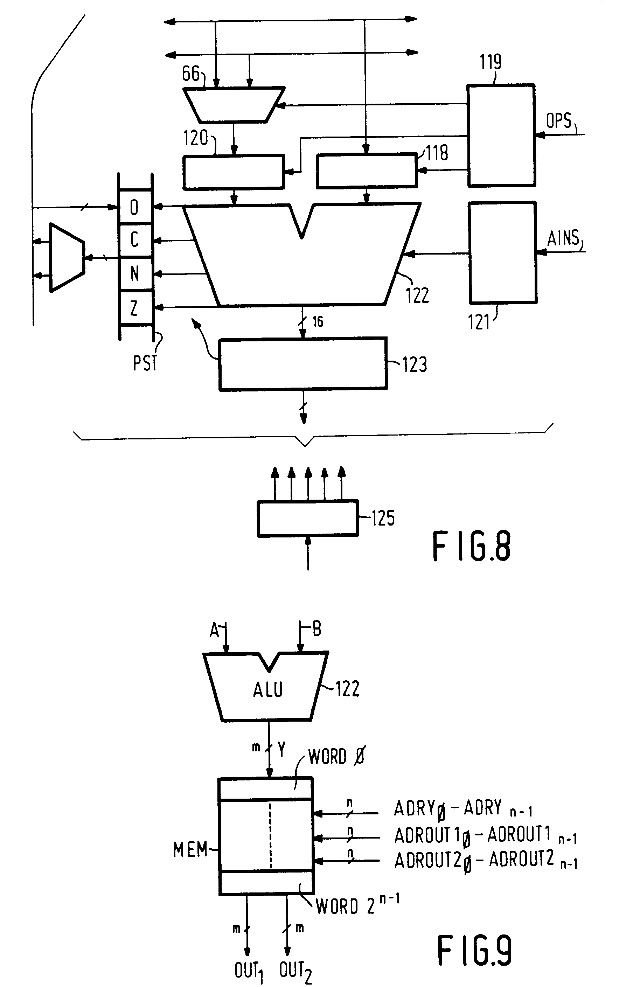

Fig. 8 shows a block diagram of the arithmetic and logic unit 122 and its environment. The blocks 66, 118, 120, 122 are shown in Fig. 1. Block 119 represents a decoder for the field OPS for the instruction. Block 121 represents a decoder for the block AINS of the instruction. Block 125 represents a decoder for the relevant SX, SY, DX, DY fields of the instruction. To the output of the ALU element 122 there is connected a block 123 for the shift and rotation functions which will be described in detail hereinafter. The program status register PST is connected, using decoding elements not shown to the ALU 122 and the shift/rotation functions in the block 123.

The unit 122 operates in two's complement notation. Flag bits can be formed (a higher number would be feasible):

Z : result of the ALU operation is "zero" ;
N : result(interpreted as 2's-complement number) is negative;
C : there is a carry signal, which may occur in unsigned arithmetic operations for any less significant part of multiprecision words;
O : overflow condition, which implies an error in the case of 2's complement notation. The bit "Z" is thus formed by detection of all bits of the operand together; the bits C and N are formed by detection of a single bit, the overflow condition being detected in the same manner as described previously for the multiplier element.

The following operations are defined :

1. COM logic complement
2. AND logic AND-function
3. OR logic OR-function
4. EXOR logic EXCLUSIVE-OR function
5. ADD addition
6. XADD extended (multiprecision) addition; this means that during previous treatment of a less significant part of the operand any carry signal is stored for later treatment of a more significant part of the operand.
7. SUB subtraction
8. XSUB extended (i.e. multiprecision) subtraction;

again a bit signal is carried between successively treated parts of an operand in given circumstances
9. NEG an arithmetical inversion
10. XNEG extended (multiprecision) inversion
11. CNEG conditional inversion
12. -
13. INC incrementation
14. XING extended(i.e. multiprecision) incrementation
15. DEC decrementation
16. XDEC extended (i.e. multiprecision) decrementation
17. NOP no action, flag bits retained
18. PASS conduct operand without modification
19. SWAP more significant and less significant bytes are interchanged
20. CSUB conditional subtraction
21. -
22. ADDM add most significant bit of operand B to operand A
23. XSGN copy N flagbit (indicating the sign) over 16 bits; therefore, this is a "sign extension" as described for the multiplier element.
24. ASL arithmetical shift to the left (more significant direction)
25. XASL extended shift ditto
26. LSL logic shift to the left
27. LROL logic rotation to the left
28. ASR arithmetical shift to the right
29. XASR extended shift according to 28
30. LR logic shift to the right
31. LROR logic rotation clockwise
32. NULL generate output "0".

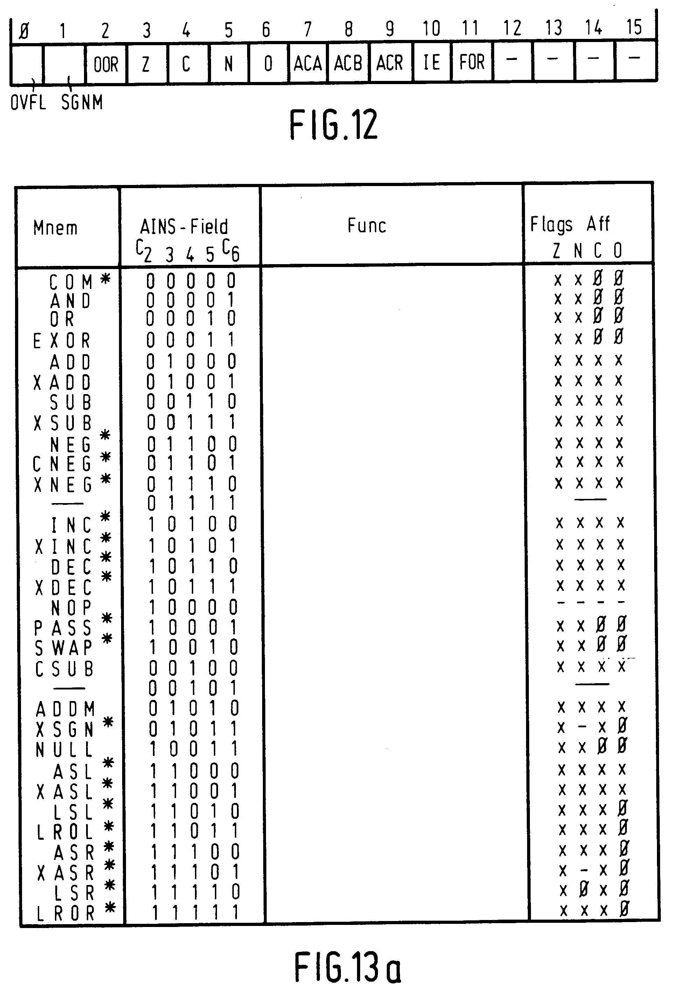

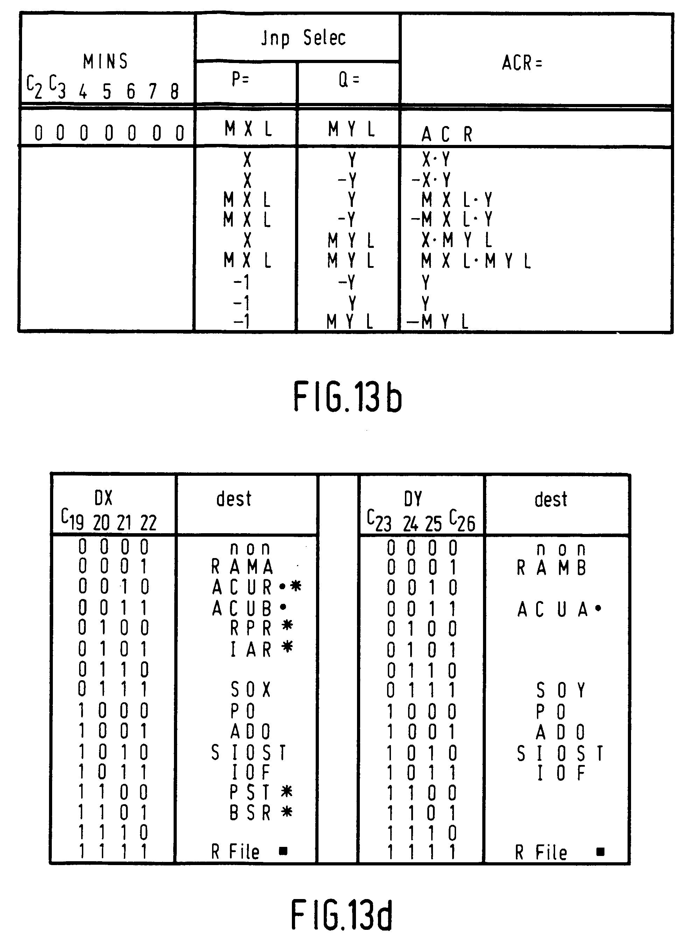

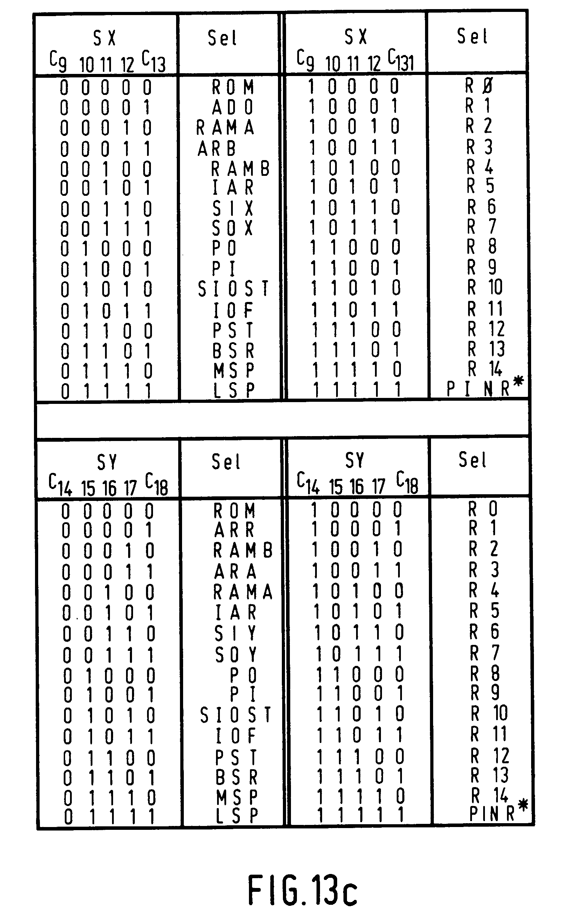

In the above list logic operations are performed at the bit level. For arithmetical operations, the sign bit or bits is (are) treated in a specific manner in given circumstances. For the rotation operations, the shifted out bit is added to the operand again at the opposite end. For details of the sub-fields of the instruction, reference is made to the Figures 13 (a-d). The connection of the program status register PST (via a selector) to the bus connection means is shown in simplified form.

Fig. 9 shows details of the structure of the first accumulator means. It will be apparent that the accumulator adder 122 is situated within the ALU. The memory MEM consists of a memory bank for $2^{n-1}$ words of m = 16 bits each. It has a data input Y and two data outputs 0UT1 and 0UT2, each m bits wide. There are three separate address inputs ADRY, ADROUT1 and ADROUT2, each having a width of n bits (in this case n = 4). The first one is a write address, the other two being read addresses, each for the associated data connection. The three connections can be simultaneously and independently operative in one and the same instruction cycle.

7)Interrupt address register 24:

Register 24 is to be loaded from one of the buses and contains an address which is transferred to the program counter 30 at the beginning of an interrupt operation.

8) Program status register.

In this respect reference is made to Fig. 12 which shows the bit-wise subdivision of the sixteen-bit program status register (in element 34 in Fig. 1). The bits have the following meaning:

Ø, 1 :      OVFL, and SGNM, the two bits disclosed with respect to the multiplier element and its environment
2 :      OOR, overflow condition of the extractor
3-6 :      Z, C, N, O, the four bits described with reference to the ALU unit,
7-9 :      three flags reserved for the address calculation units
10 :      IE interrupt admissible/not admissible
11 :      FQR, instruction cycle selection bit; the last two bits can be modified by program control
12-15 :      not used

9) Input/ output status register (IOF).

This register forms part of the register bank 34 which comprises three registers. It contains status information and flag bits for communication with the environment. The bits have the following meaning: SIXACK denotes the degree of filling of the register 82 with valid information. SIYACK does so for the register 132. SOXACK indicates whether the register 84 is loaded with data. SOYACK serves the same purpose. PIACK : a transition from low to high on the $\overline{WR}$ pin sets this flag bit to "1", synchronized by the separate clock (not shown) of the processor. When the data is read from the PI register (86), this flag is set to Ø again. POACK : a transition from low to high on the $\overline{RD}$ pin sets this flag bit to "1", synchronized by the internal clock. When data is written in the PO (86) register, this flag is set to Ø again. Two bits IFA, IFB in this register contain flag bits to be defined by a user; these flag bits may be interrogated via connection pins which are reserved on the integrated circuit for this purpose during the gesting of jump conditions.

10) Instruction repeat register 32.

This register 32 acts as a hardware instruction counter; when it is loaded with the value N, the next instruction is repeated N times. This register is decremented in reaction to the execution of I any I instruction, while the program counter in the element 30 can be incremented only when the content of register 32 is zero. Such repeating can be advantageously used notably for vector operations.

11) Description of the input/output structure.

The SOX (84) and SOY (132) connections can output data from the relevant data buses to the environment. To this end, each connection comprises a 16-bit register which can be synchronized by an external clock connection. These registers also receive internal request and enable signals as a synchronization handshake for a filling operation. Both outputs have a presettable counter for indicating the number of bits to be outputted.

The SIX (82) and SIY (130) connections can receive data from the environment for output to the relevant data buses. To this end, each connection comprises a serial input shift register which can be synchronized by an external clock connection. The input shift register is connected in parallel to a buffer register for the feeding of the bus. Finally, these registers receive internal request and enable signals as a synchronization handshake for a read operation from the parallel register. There is also provided a presettable counter for controlling the number of bits to be loaded onto the buses in parallel.

The PI/PO (86) connection provides parallel transport to and from the processor, respectively. To this end, a 16-bit register is provided each time.

The additional output connection ADO(80) provides external transfer of data or addresses; the latter are calculated in an address calculation unit or in the arithmetic and logic unit. In this case there is provided a register which is to be selectively filled by both buses. These structures will be described in detail hereinafter with reference to some Figures. The set-up shown is substantially symmetrical with respect to the two buses. In other situations a less symmetrical set-up may be advantageous in order to save parts.

12) Series connection status register (SIOST):

This is the last register of the register bank 34 which contains status information concerning the serial connections. The first four bis SILX3...0 of the 16 bits (actually the bis SILX Ø is the first bit of this status word) contain the word length for the series input shift register (of connection SIX); code 0000 means a word length of 16 bits and so on, so that finally the code 111 means a word length of 1 bit. The sequence bits SOLX3...   Øthe same for the connection SOX, the bits SILY3...   Øthe same for the connection SIY, and the bits SOLY3...   Øthe same for the connection SOY. The interrupt mechanism:

External interrupt signals are represented by a low signal on the pin $\overline{INT}$ during at least 200 ns. This pin is interrogated every instruction cycle and so is the bit EI (enable bit) in the program status register. If EI = 1 and $\overline{INT}$ = 0, a branch operation is performed in the same cycle to the interrupt address (IAR register) and the bit IE is set to "0", the return address (content of program counter +1) being stored on the register stack. The switching over of the bit IE to "1" is performed under program control, after which in given circumstances the treatment of a next interrupt may commence. If subsequently $\overline{INT}$ = 1 for an entire instruction cycle, all interrupt requests have been dealt with. Subsequently, the most recent return address is recalled from the stack registers.

Considering the size of the stack registers, 8 successive interrupt levels can be concurrently nested. The same is applicable to successive interrupt routines.

Finally there is provided a reset pin for resetting the ($\overline{RST}$) processor when this pin carries a low signal for at least 200 ns. The signal is stored in a flag flip-flop.

Parallel input/output structure:

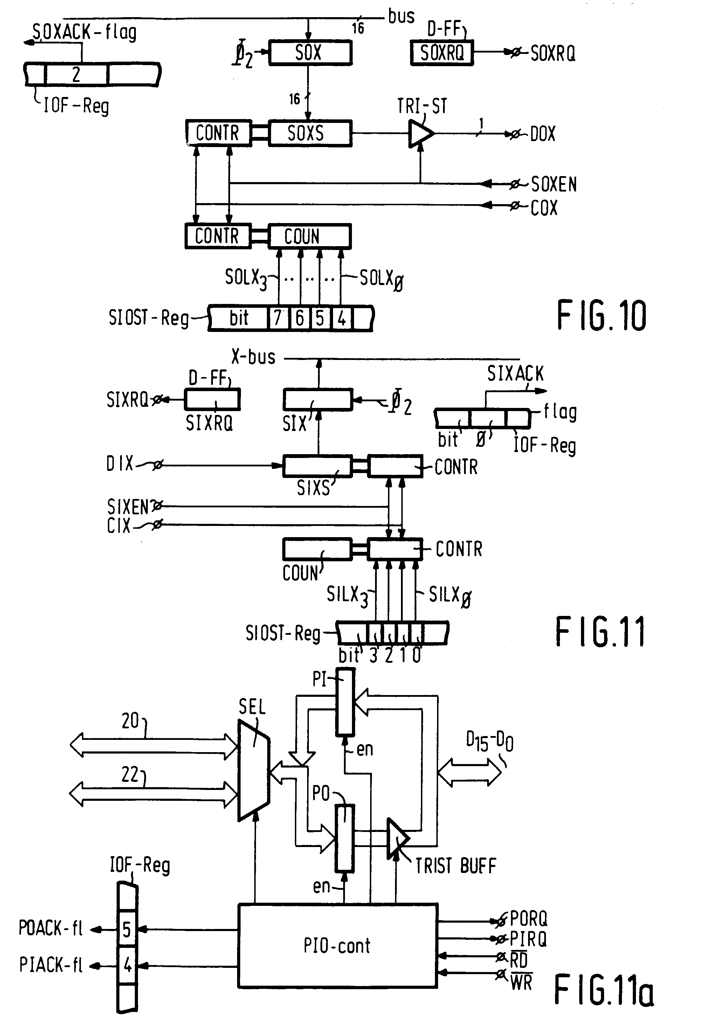

Fig. 11a diagrammatically shows the input/output structure (parallel section). The buses 20/22, a 16-bit selector structure SEL, two parallel registers PI/PO, a tristate buffer TRISTBUFF, the external 16-bit bus D15 ... DO, a control unit PIOCONTR, and the control bits PIACK, POACK are shown. The signals $\overline{RD}$ and $\overline{WR}$ to be supplied by an external device have already been described. The bits PIRQ/PORQ are request bits to the environment.

Fig. 10 diagrammatically shows one of the two serial output connections. The output register (in this case SOX) is directly connected to the bus and feeds the output shift register SOXS. The presettable counter COD which can be loaded by the SIOST register is also shown. Output data may be taken up in SOXS only when this register is completely empty (determined by the counter content); in reaction thereto, SOXACK is set to "1" and new data may be applied; SOXRQ = 1 indicates a request to the environment and the counter is loaded. The output of the data to the environment commences when the pin SOXEN becomes "1", synchronization being performed by clock pulses on pin SOX. The tristate buffer TRIST is co-controlled by the value SOXEN. After the counter stops counting and no further data is waiting (SOACK = 1),bit SOXRQ is set to "0" so that SOXS and the counter assumes the "hold" state so that the last bit outputted remains on the pin DOX. When SOXEN becomes "0", the output circuit DOX assumes the high impedance initial state again.

Fig. 11 shows the serial input structure (in this case shown for the X-bus), comprising register SIX, input shift register SIXS, presettable counter COUN, and control and flag bit positions. When SIX is internally addressed as a data source, the flag SIXACK is set to "0" in the register IOF; it is valid for the next processor cycle. Data received in the shift register SIXS is transferred to the register SIX if the counter content indicates that the shift operation has been completed; the flag SIXACK then also becomes high in order to indicate the availability of data to the processor. At the same time the flag bit SIXQR becomes high in order to inform the environment that the shift register SIXS may receive new data, the counter being loaded again with the length-indicating bits SILX3...SILXØ; when this counter has been reset, the next data is completely present in the shift register SIXS. The serial input commences as soon as the input bit SIXEN becomes high after SIXQR has become high. Synchronization is provided by the serial clock CIX. When the counter has been completely reset and there is still data which has not been transferred to the register SIX, the flag bit SIXQR is set to "Ø" so that the counter and the shift register SIXS directly assume the "hold" mode.

Description of the fast mode of operation:

The operation of the processor has been described thus far for a 200 ns instruction cycle. When more use is made of a pipeline mechanism, the processor is also capable of implementing an instruction cycle of only 100 ns. In this respect reference is again made to Fig. 1; notably the registers 60 (at the output of the multiplier element), 46, 104, 88 (at the output of the data memory) also form part of the pipeline structure. By adaptation of the clock frequency the acceleration can be chosen so as to be less than a factor two.

Fig. 4 shows a time diagram for the operation. Therein, the bit FQR in the program status register PST continuously has the value "1".

In the "ALU" instruction, the following operations can be performed in parallel:

- an arithmetic/logic operation;
- at the most three address calculations for the memories;
- addressing of at the most three memory output registers;
- data transport on one or both buses.

In the "multiplication" instruction, the following operations can be performed in parallel:

- a multiplication operation;
- an accumulation/shift operation (elements 62, 64);
- at the most three address calculations for the memories;
- addressing of at the most three memory output registers;
- data transport on one or both buses.

In the "immediate load" instruction, the following operations can be performed in parallel:

- transporting data from the data field of the instruction (in IR) to a destination on the X and/or Y bus;
- at the most three address calculations for the memories;
- addressing of at the most three memory output registers.

Line 300 in Fig. 4 indicates the successive cycles. On line 302 block 1 shows the address calculation. Block 1, line 304 represents the "read" access by way of the previously calculated address. The next block 2 indicates the time during which the data is valid in the output register of the memory thus addressed. Block 1 of line 306 indicates that the transport takes place via the bus (buses) and possibly the processing in ALU and/or the multiplier element. Line 308 of block 2 (which is two blocks later than the block 1 on the line 306 in which the processing is initiated) indicates that the processing result in valid in the output register of the multiplier element when addressed. On the other hand, an operation can similarly be performed in the ALU unit. Line 310 of block 1 indicates (in time before block 2 on line 308) that the address calculation for the next write operation (for the calculation result) may take place (in time before block 2 on line 308). On line 312 block 1 indicates that a bus transport and possibly a write access in a memory take place.

The instruction register must now receive new data every 100 ns (so twice as fast as previously ). The register BSR must now also be filled one instruction cycle before the actual shift/reformatting operation and must remain valid for at least one instruction cycle. The flag bits EI (for the interrupt) and RESET (for resetting) are now interrogated every 100 ns.

A small difference with respect to the operations during the "slow" instruction cycle is that the output registers of the memories now act as source elements for the data bus (buses) instead of these memories themselves. Furthermore, all branch instructions and interrupt requests must always be followed by an instruction which does not imply an operation (NOP); the content of the memories is thus saved.

Detailed description of the instruction set:

Referring to Fig. 2 again which shows the main types of instruction words, some specific instruction fields will be described in detail hereinafter. Fig. 13a shows a table of the instruction field AINS of the arithmetic instructions. The first column gives the mnemonics. The second column shows the binary code. The last column shows the operation on the flag bits Z, N, C, O. An asterisk in the first column means that only one operand is processed; consequently, this operand must arrive in the arithmetic and logic unit necessarily via the selector 66. A cross in the fourth column indicates that the filling of the relevant flag bits is determined by the result of the operation. A "zero" (Ø) indicates that the relevant flag bit must be reset to zero. A horizontal dash indicates that the flag bit remains unmodified in all circumstances.

The field OPS selects the operands for the two inputs A (via register 120) and B (via register 118). For the two-operand instructions, the bit C7 provides the control for the B input: "0" gates an operand from the bus 22;

"1" gates the operand present in the register 118. Bit C8 provides the control for the A input: "0" gates the operand of the bus 20 and "1" admits the operand already present in the register 120. For the one-operand instructions (denoted by an asterisk in Fig. 13a), the register 118 is in the "hold" state, the codes 00, 01, 10 successively selecting the register 120, the bus 22 and the bus 20 in order to perform the operation on an associated operand. For the operation SWAP, the register 118 is in the hold mode; the code 01 selects the bus 22 and the code 10 selects the bus 20 for the operation; the register 120 is transparent.

Fig. 13b shows a table of the field MINS of the arithmetic instructions. There are seven code bits for 45 codes, so that a given degree of freedom of definition is obtained in order to facilitate the decoding. The codes can be divided into five groups, only the first group being shown in its entirety. The first column offers space for the code bits. The second column indicates the selection function for the elements 50/52. Thus, a transparency can be controlled (X) to the bus, or the content of the register can be used (MXL). Finally, a multiplier factor "-1" can be introduced. The third column indicates the selection function for the elements 54/56. A transparency (Y) can now be controlled to the bus, or the content of the register can be used (MYL); furthermore, the transparency can be controlled with an inversion. Always 200 ns is required for a multiplication operation. The fourth column shows the product thus formed.

The second group of codes is identical to the first group; moreover, the accumulator/adder 64 is activated in order to add the content of the register 68 with a positive sign to the product of the two factors. The third group is identical to the second group, except that the content of the register 68 is now preceded by a negative sign. The fourth group is identical to the second group, except that the content of the register 68 is now shifted to the right through 15 bit locations (multiplication by $2^{-15}$). The fifth group is identical to the fourth group, except that the (shifted) content of the register 68 is now preceded by a negative sign.

Fig. 13c shows two tables for the bus 20 and the bus 22, respectively, in order to indicate that these elements are capable of acting as a source for the bus. Herein, ROM indicates element 90, ADO: element 80, RAMA: element 36, ARB: element 106, RAMB: element 102, IAR : element 24, SIX, SOC, PO, PI: the elements of the input/output structure SIOST, PST, IOF: the registers of the bank 34, BSR : element 70, MSP/LSP : elements 72/74, RØ ... R14 : the registers of the bank 116, and PINR the same as PI without treatment of pin PIQR. Finally ARR is element 100, ARA element 48.

Fig. 13d shows two tables for the fields DX, DY. Therein, the elements ACUA, ACUB, ACAR are the address calculation units of the memories 36, 102, 90 respectively The instruction field for this address calculation unit determines which local register is loaded. For the element 116 the field R-file selects which of the registers is loaded.

Finally the connection pins for signals will be described.

CLK : clock for synchronizing internally derived clock signals
$\overline{RST}$ : reset pin
DØ...D15 : bidirectional I/O data pins
$\overline{INT}$ : pin for external interrupt
IFA, IFB : two flags to be defined by the user
A15...AØ : extra data outputs (parallel)
DIX, DIY : serial data inputs
DOX, DOY : serial data outputs
SOXRQ, SOYRQ : serial input requests
SOXEN, SOYEN : serial enable signals
COX, COY : external asynchronous clock for serial data output
SIXRQ, SIYRQ : request signals serial data input
SIXEN, SIYEN : enable signals serial data input
CIX, SIY : external asynchronous clock for serial data input
$\overline{RD}$, $\overline{WR}$ : read-write control for parallel I/O registers
PORQ, PIRQ : request signals parallel input/output
SYNC : output clock signals (in synchronism with instruction cycle) for synchronizing an external device.

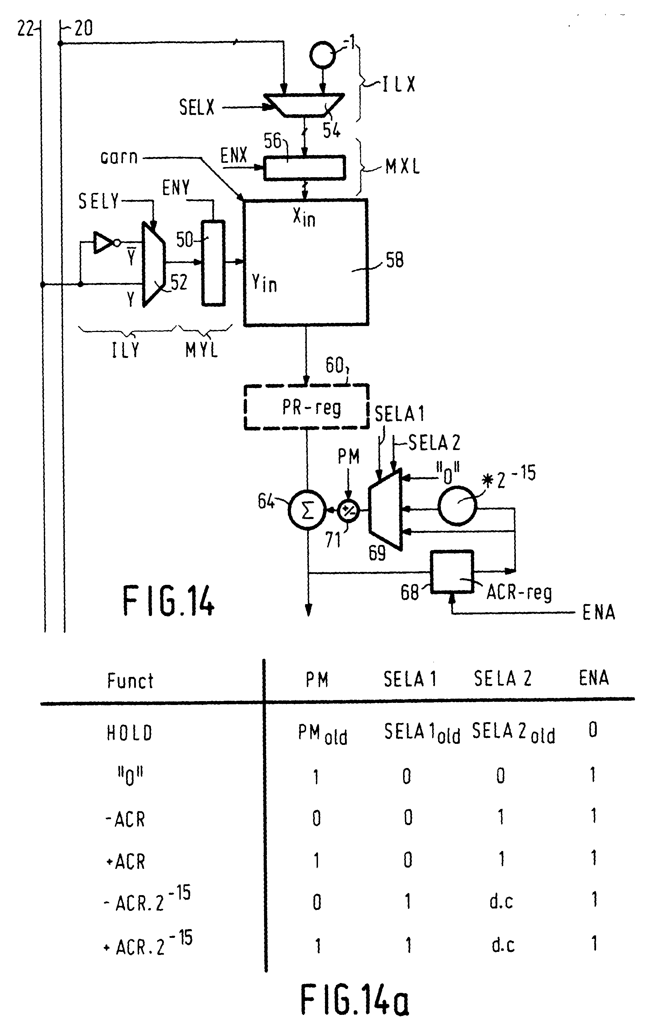

Fig. 14 illustrates the multiplier element; the circuit arrangement will first be described. Corresponding elements are denoted by the same reference numerals as used in Fig. 1. Bus 20 is connected to the X-selector 54. Under the control of the bit SELX, the selector conducts either the bus operand or a value "-1"which is formed by a signal generator (not shown). Register 56 is made selectively transparent under control of bit ENX. The bus 22 is connected to the Y-selector 52. Under the control of the bit SELY, the selector gates either the bus operand or the arithmetically inverted value thereof. As a result of the two's complement notation used, this conversion is very simple. Register 50 is transparent or not under the control of the bit ENY. Thus, in the described manner three possibilities can be selected by the two control bits for each input of the multiplier element. The multiplier element 58, moreover, receives a carry input signal: CARR. To the output of the multiplier element 58 there is connected a register PR. The accumulator/adder 64 does not receive special function signals. The accumulator register 68 receives an enable signal ENA. Selector 69 is connected to the output of register 68 to allow the operand stored therein to be transferred, either without modification or shifted over 15 bit positions in the less significant direction. The latter is again effected by the staggering of the connections. The selector 69 also receives an operand "0". Between the selector 69 and the accumulator/adder 64 there is also included an inverter 71 which is selectively activatable by a signal PM.

The output of the accumulator/adder 64 is also connected to the shift element 62 which will not be described again herein. Figure 14a shows a control table with six functions to be controlled for the element 64 in the first column. The right-hand columns of the Figure contain the required control signals. On line 1, the signals PM and SELA 1, 2 retain their previous value: the content of the register 68 then remains the same.

## Claims

1. A single-chip integrated circuit digital signal processor comprising:

    a. bus means (20, 22) for effecting wordwise transports;
    b. first calculation means (58, 122) having a first input (50, 118) fed by said bus means and an output accumulator means (116) selectably connectable to feed said bus means or a second input of said first calculation means;
    c. data read-write memory means (36, 102) having address calculation means (38, 92, 114) fed by said bus means and data input-output means (46, 88, 104) bidirectionally connected to said bus means,
    d. connection means (30) fed by said bus means for therefrom receiving address information for a program memory (28) and from said program memory transmitting control information to further components of said processor;
    e. external input/output means (80-86, 130, 132) bidirectionally connected to said bus means;
    f. pipeline control means having a slow mode of operation and a fast mode of operation;

for in said slow mode of operation within a single instruction cycle controlling coexistently

- a memory address calculation in said address calculation means (38, 114) and associated access to said data read-write memory means;
- a bus transport of a current data word to said first calculation means and a data processing operation thereon to produce a result data word in said output accumulator register means;

and for in said fast mode of operation within a single instruction cycle controlling coexistently

- a memory address calculation (302) in said address calculation means (38, 92, 114) to produce a next memory address;
- a memory access (304) under control of a current memory address to yield a next data word;

- a bus transport (306) of a current data word to said first calculation means (58, 122) and data processing operation thereon to form a result data word during the duration of a current instruction cycle (306) plus a next-following instruction cycle (308) joined;

g. pipeline registers (46, 48, 50, 56, 60, 88, 100, 104, 106, 118, 120) connected with said first calculation means, said address calculation means and said read-write memory means such as to hold as said current memory address said next memory address calculated in said address calculation means one cycle ahead, to hold as said current data word the data obtained during access to said read-write memory means one cycle ahead and to hold as data for said next-following joined instruction cycle the data obtained from processing operation one cycle ahead, wherein some of said pipeline registers (46, 50, 56, 88, 104, 118, 120) are activated in a transparent condition in said slow mode of operation but activated in a holding condition in said fast mode of operation.

2. A digital signal processor as claimed in Claim 1, wherein said bus means have a width equal to at least twice the length of a data word, to allow for simultaneous presentation of two data words to a selection of said first calculation means, said address calculation means, and said connection means.

3. A digital signal processor as claimed in Claim 2, wherein said input register is located between the output of said accumulator means and said bus means and wherein said second input is directly fed by said bus means.

4. A digital signal processor as claimed in Claim 1 or any of the following furthermore comprising said program memory on-chip.

5. A digital signal processor as claimed in Claim 4, wherein said program memory is programmable.

**Patentansprüche**

1. Integrierter digitaler Einchip-Signalprozessor mit:

a. Busmitteln (20, 22) zum Bewirken von wortweisen Übertragungen;
b. ersten Berechnungsmitteln (58, 122) mit einem von den genannten Busmitteln gespeisten, ersten Eingang (56, 118) und einem Ausgangsakkumulatormittel (116), das selektierbar anschließbar ist, um die genannten Busmittel oder einen zweiten Eingang der genannten ersten Berechnungsmittel zu speisen;
c. Datenlese-/-schreibspeichermitteln (36, 102) mit von den genannten Busmitteln gespeisten Adreßberechnungsmitteln (38, 92, 114) und bidirektional mit den genannten Busmitteln gekoppelten Dateneingabe-/-ausgabemitteln (46, 88, 104);
d. von den genannten Busmitteln gespeisten Anschlußmitteln (30), um daraus Adreßinformation für einen Programmspeicher (28) zu erhalten und aus dem Programmspeicher heraus Steuerinformation zu weiteren Komponenten des genannten Prozessors zu übertragen;
e. externen Eingabe-/Ausgabemitteln (80-86, 130, 132), die bidirektional mit den genannten Busmitteln gekoppelt sind;
f. Pipeline-Steuerungsmittel mit einer langsamen Betriebsart und einer schnellen Betriebsart;

um in der genannten langsamen Betriebsart innerhalb eines einzigen Befehlszyklus gleichzeitig folgendes zu steuern:

- eine Speicheradreßberechnung in den genannten Adreßberechnungsmitteln (38, 114) und zugehörigen Zugriff auf die genannten Datenlese-/-schreibspeichermittel,
- einen Bustransport eines aktuellen Datenwortes zu den genannten ersten Berechnungsmitteln (38, 114) und darauf eine Datenverarbeitungsoperation zum Erzeugen eines Ergebnisdatenwortes in den genannten Ausgangsakkumulatorregistermitteln;

und um in der genannten schnellen Betriebsart innerhalb eines einzigen Befehlszyklus gleichzeitig folgendes zu steuern:

- eine Speicheradreßberechnung (302) in den genannten Adreßberechnungsmitteln (38, 92, 114) zum Erzeugen einer folgenden Speicheradresse;
- einen Speicherzugriff (304) unter Steuerung einer aktuellen Speicheradresse zum Erhalten eines folgenden Datenwortes;
- einen Bustransport (306) eines aktuellen Datenwortes zu den genannten ersten Berechnungsmitteln (58, 122) und darauf eine Datenverarbeitungsoperation zum Erzeugen eines Ergebnisdatenwortes während der Dauer eines aktuellen Befehlszyklus (306) plus eines erstfolgenden Befehlszyklus (308) zusammen;

g. Pipeline-Registern (46, 48, 50, 56, 60, 88, 100, 104, 106, 118, 120), die innerhalb der genannten ersten Berechnungsmittel, der genannten Adreßberechnungsmittel und der genannten Lese/Schreibspeichermittel angeschlossen sind, um als die genannte aktuelle Speicheradresse die genannte folgende, in den genannten Adreßberechnungsmitteln einen Zyklus zuvor berechnete Speicheradresse zu halten, um als das genannte aktuelle Datenwort die beim Zugriff auf die genannten Lese-/Schreibspeichermittel einen Zyklus zuvor erhaltenen Daten zu halten und um als Daten für den genannten erstfolgenden gemeinsamen Befehlszyklus die aus der Verarbeitungsoperation einen Zyklus zuvor erhaltenen Daten zu halten, wobei einige der genannten Pipeline-Register (46, 50, 56, 88, 104, 118, 120) in der genannten langsamen Betriebsart in einem transparenten Zustand aktiviert werden, aber in der genannten schnellen Betriebsart in einem Haltezustand aktiviert werden.

2. Digitaler Signalprozessor nach Anspruch 1, wobei die genannten Busmittel eine Breite haben, die gleich zumindest zweimal der Länge eines Datenwortes ist, um ein gleichzeitiges Anbieten von zwei Datenwörtern an eine Auswahl aus den genannten ersten Berechnungsmitteln, den genannten Adreßberechnungsmitteln und den genannten Anschlußmitteln zu ermöglichen.

3. Digitaler Signalprozessor nach Anspruch 2, wobei das genannte Eingangsregister zwischen dem Ausgang der genannten Akkumulatormittel und den genannten Busmitteln liegt und wobei der genannte zweite Eingang direkt von den genannten Busmitteln gespeist wird.

4. Digitaler Signalprozessor nach Anspruch 1 oder einem der folgenden, mit weiterhin dem genannten Programmspeicher auf dem Chip.

5. Digitaler Signalprozessor nach Anspruch 4, wobei der genannte Programmspeicher programmierbar ist.

**Revendications**

1. Processeur à circuit intégré sur une seule puce pour le traitement de signaux numériques comportant:

    a. des moyens de bus (20, 22) pour effectuer des transports par mots;
    b. des premiers moyens de calcul (58, 122) comportant une première entrée (50, 118) alimentée par lesdits moyens de bus et des moyens accumulateurs de sortie (116) qui peuvent être connectés sélectivement pour alimenter lesdits moyens de bus ou une deuxième entrée desdits premiers moyens de calcul;
    c. des moyens de mémoire de lecture-écriture de données (36, 102) comportant des moyens de calcul d'adresse (38, 92, 114) alimentés par lesdits moyens de bus et des moyens d'entrée/sortie de données (46, 88, 104) connectés bidirectionnellement auxdits moyens de bus;
    d. des moyens de connexion (30) alimentés par lesdits moyens de bus pour en recevoir de l'information d'adresse pour une mémoire de programme (28) et pour transmettre à partir de ladite mémoire de programme de l'information de commande à d'autres composants dudit processeur;
    e. des moyens d'entrée/sortie externes (80-86, 130, 132) connectés bidirectionnellement auxdits moyens de bus;
    f. des moyens de commande en pipeline présentant un mode de fonctionnement lent et un mode de fonctionnement rapide pour commander d'une manière coexistante dans ledit mode de fonctionnement lent dans un seul cycle d'instructions

    - un calcul d'adresse de mémoire dans lesdits moyens de calcul d'adresse (38, 114) et un accès associé auxdits moyens de mémoire de lecture-écriture de données;
    - un transport par bus d'un mot de données actuel vers lesdits premiers moyens de calcul et ensuite d'une opération de traitement de données pour produire un mot de données de résultat dans lesdits moyens de registre accumulateurs de sortie; et
    pour commander d'une manière coexistante dans ledit mode de fonctionnement rapide dans un seul cycle d'instructions
    - un calcul d'adresse de mémoire (302) dans lesdits moyens de calcul d'adresse (38, 92, 114) pour produire une adresse de mémoire suivante;
    - un accès à la mémoire (304) sous la commande d'une adresse de mémoire actuelle pour produire un mot de données suivant;
    - un transport par bus (306) d'un mot de données actuel vers lesdits premiers moyens de calcul (58, 122) et ensuite d'une opération de traitement de données pour former un mot de données de résultat pendant la durée d'un cycle d'instructions actuel (306) plus d'un cycle d'instructions combiné (308);

    g. des registres de pipeline (46, 48, 50, 56, 60, 88, 100, 104, 106, 118, 120) connectés à l'intérieur desdits premiers moyens de calcul, lesdits moyens de calcul d'adresse et lesdits moyens de mémoire de lecture-écriture pour maintenir comme ladite adresse de mémoire actuelle ladite adresse de mémoire suivante calculée dans lesdits moyens de calcul d'adresse un cycle en avant, pour maintenir comme ledit mot de données actuel les données obtenues pendant l'accès auxdits moyens de mémoire de lecture-écriture un cycle en avant et pour maintenir comme données pour ledit cycle d'instructions combiné suivant les données obtenues de l'opération de traitement un cycle en avant, dans lesquels quelques-uns desdits registres de pipeline (46, 50, 56, 88, 104, 118, 120) sont activés dans une condition transparente dans ledit mode de fonctionnement lent mais activés dans une condition de maintien dans ledit mode de fonctionnement rapide.

2. Processeur de signaux numériques selon la revendication 1, dans lequel lesdits moyens de bus ont une largeur égale à au moins deux fois la longueur d'un mot de données pour permettre la présentation simultanée de deux mots de données à une sélection desdits premiers moyens de calcul, desdits moyens de calcul d'adresse et desdits moyens de connexion.

3. Processeur de signaux numériques selon la revendication 2, dans lequel ledit registre d'entrée se situe entre la sortie desdits moyens accumulateurs et desdits moyens de bus, et dans lequel ladite deuxième entrée est alimentée directement par lesdits moyens de bus.

4. Processeur de signaux numériques selon la revendication 1 ou selon l'une quelconque des revendications suivantes, comportant en outre ladite mémoire de programme sur la puce.

5. Processeur de signaux numériques selon la revendication 4, dans lequel ladite mémoire de programme est programmable.

FIG.1

| $C_0$ $C_1$ | 2 | 6 7 | 8 9 | | 13 14 | | 18 19 | | 22 23 | | 26 27 | | 30 31 | 33 34 | 36 37 | $C_{39}$ |
|---|---|---|---|---|---|---|---|---|---|---|---|---|---|---|---|---|
| Ø Ø | AINS | | OPS | SX | | SY | | DX | | DY | | R file | | ACU A | ACU B | ACU R |

| $C_0$ $C_1$ $C_2$ | | 8 9 | | 13 14 | | 18 19 | | 22 23 | | 26 27 | | 30 31 | 33 34 | 36 37 | $C_{39}$ |
|---|---|---|---|---|---|---|---|---|---|---|---|---|---|---|---|
| Ø 1 | MINS | | SX | | SY | | DX | | DY | | R file | | ACU A | ACU B | ACU R |

| $C_0$ $C_1$ 2 3 | | | 18 19 20 21 | | 26 27 | | $C_{39}$ |
|---|---|---|---|---|---|---|---|
| 1 Ø / | $(A_{15})$ - - - - | NAP | $(A_0)$ BR | COND | | | |

| $C_0$ $C_1$ 2 3 | | 18 19 | | 22 23 | | 26 27 | | 30 31 | 33 34 | 36 37 | $C_{39}$ |
|---|---|---|---|---|---|---|---|---|---|---|---|
| 1 1 / | (MSB) DATA (LSB) | DX | | DY | | R file | | ACU A | ACU B | ACU R |

FIG.2

FIG.3

FIG.4

FIG.5

| MNEM | C O D | OPERA | | | |
| --- | --- | --- | --- | --- | --- |
| | | $AR_{new}$ | $A_{new}$ | $S_{new}$ | $M_{new}$ |
| NOP | 0 0 0 | AR | A | S | M |
| INCA | 0 0 1 | (A+1) m M | (A+1) m M | S | M |
| DECA | 0 1 0 | (A-1) m M | (A-1) m M | S | M |
| STP | 0 1 1 | (A+S) m M | (A+S) m M | S | M |
| STM | 1 0 0 | (A-S) m M | (A-S) m M | S | M |
| FTCA | 1 0 1 | (A) m M | (A) m M | S | M |
| FTCS | 1 1 0 | (S) m M | A | (S) m M | M |
| BRAS | 1 1 1 | BR((A+S)mM) | (A+S) m M | S | M |
| LDIR | 0 0 0 | BUS | A | S | M |
| LDAA | 0 0 1 | BUS | BUS | S | M |
| LDAS | 0 1 0 | BUS | A | BUS | M |
| LDA | 0 1 1 | ADDR | BUS | S | M |
| LDS | 1 0 0 | ADDR | A | BUS | M |
| LDM | 1 0 1 | ADDR | A | S | BUS |
| LAAS | 1 1 0 | BUS | BUS | BUS | M |
| LALL | 1 1 1 | BUS | BUS | BUS | $\overline{BUS}$ |

# FIG.6

FIG.7

FIG.7a

EP 0 333 306 B1

FIG.8

FIG.9

**FIG.10**

**FIG.11**

**FIG.11a**

| Ø | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
|   |   | OOR | Z | C | N | 0 | ACA | ACB | ACR | IE | FOR | — | — | — | — |

OVFL  SGNM

# FIG.12

| Mnem | AINS - Field $C_2$ 3 4 5 $C_6$ | Func | Flags Aff Z N C 0 |
|------|------------------------------|------|---------------------|
| C O M * | 0 0 0 0 0 | | x x Ø Ø |
| A N D | 0 0 0 0 1 | | x x Ø Ø |
| O R | 0 0 0 1 0 | | x x Ø Ø |
| E X O R | 0 0 0 1 1 | | x x Ø Ø |
| A D D | 0 1 0 0 0 | | x x x x |
| X A D D | 0 1 0 0 1 | | x x x x |
| S U B | 0 0 1 1 0 | | x x x x |
| X S U B | 0 0 1 1 1 | | x x x x |
| N E G * | 0 1 1 0 0 | | x x x x |
| C N E G * | 0 1 1 0 1 | | x x x x |
| X N E G * | 0 1 1 1 0 | | x x x x |
|  | 0 1 1 1 1 | | ———— |
| I N C * | 1 0 1 0 0 | | x x x x |
| X I N C * | 1 0 1 0 1 | | x x x x |
| D E C * | 1 0 1 1 0 | | x x x x |
| X D E C * | 1 0 1 1 1 | | x x x x |
| N O P | 1 0 0 0 0 | | – – – – |
| P A S S * | 1 0 0 0 1 | | x x Ø Ø |
| S W A P * | 1 0 0 1 0 | | x x Ø Ø |
| C S U B | 0 0 1 0 0 | | x x x x |
|  | 0 0 1 0 1 | | |
| A D D M | 0 1 0 1 0 | | x x x x |
| X S G N * | 0 1 0 1 1 | | x – x Ø |
| N U L L | 1 0 0 1 1 | | x x Ø Ø |
| A S L * | 1 1 0 0 0 | | x x x x |
| X A S L * | 1 1 0 0 1 | | x x x x |
| L S L * | 1 1 0 1 0 | | x x x Ø |
| L R O L * | 1 1 0 1 1 | | x x x Ø |
| A S R * | 1 1 1 0 0 | | x x x Ø |
| X A S R * | 1 1 1 0 1 | | x – x Ø |
| L S R * | 1 1 1 1 0 | | x Ø x Ø |
| L R O R * | 1 1 1 1 1 | | x x x Ø |

# FIG.13a

23

| MINS C$_2$ C$_3$ 4 5 6 7 8 | Jnp Selec P= | Jnp Selec Q= | ACR= |
|---|---|---|---|
| 0 0 0 0 0 0 | M X L | M Y L | A C R |
| | X | Y | X·Y |
| | X | −Y | −X·Y |
| | M X L | Y | M X L·Y |
| | M X L | −Y | −M X L·Y |
| | X | M Y L | X·M Y L |
| | M X L | M Y L | M X L·M Y L |
| | −1 | −Y | Y |
| | −1 | Y | Y |
| | −1 | M Y L | −M Y L |

## FIG.13b

| DX C$_{19}$ 20 21 22 | dest | DY C$_{23}$ 24 25 C$_{26}$ | dest |
|---|---|---|---|
| 0 0 0 0 | n o n | 0 0 0 0 | n o n |
| 0 0 0 1 | R A M A | 0 0 0 1 | R A M B |
| 0 0 1 0 | A C U R •* | 0 0 1 0 | |
| 0 0 1 1 | A C U B • | 0 0 1 1 | A C U A • |
| 0 1 0 0 | R P R * | 0 1 0 0 | |
| 0 1 0 1 | I A R * | 0 1 0 1 | |
| 0 1 1 0 | | 0 1 1 0 | |
| 0 1 1 1 | S O X | 0 1 1 1 | S O Y |
| 1 0 0 0 | P O | 1 0 0 0 | P O |
| 1 0 0 1 | A D 0 | 1 0 0 1 | A D 0 |
| 1 0 1 0 | S I O S T | 1 0 1 0 | S I O S T |
| 1 0 1 1 | I O F | 1 0 1 1 | I O F |
| 1 1 0 0 | P S T * | 1 1 0 0 | |
| 1 1 0 1 | B S R * | 1 1 0 1 | |
| 1 1 1 0 | | 1 1 1 0 | |
| 1 1 1 1 | R File ■ | 1 1 1 1 | R File ■ |

## FIG.13d

| SX | | | | | Sel | SX | | | | | Sel |
|---|---|---|---|---|---|---|---|---|---|---|---|
| $C_9$ | 10 | 11 | 12 | $C_{13}$ | | $C_9$ | 10 | 11 | 12 | $C_{131}$ | |
| 0 | 0 | 0 | 0 | 0 | ROM | 1 | 0 | 0 | 0 | 0 | R Ø |
| 0 | 0 | 0 | 0 | 1 | AD0 | 1 | 0 | 0 | 0 | 1 | R 1 |
| 0 | 0 | 0 | 1 | 0 | RAMA | 1 | 0 | 0 | 1 | 0 | R 2 |
| 0 | 0 | 0 | 1 | 1 | ARB | 1 | 0 | 0 | 1 | 1 | R 3 |
| 0 | 0 | 1 | 0 | 0 | RAMB | 1 | 0 | 1 | 0 | 0 | R 4 |
| 0 | 0 | 1 | 0 | 1 | IAR | 1 | 0 | 1 | 0 | 1 | R 5 |
| 0 | 0 | 1 | 1 | 0 | SIX | 1 | 0 | 1 | 1 | 0 | R 6 |
| 0 | 0 | 1 | 1 | 1 | SOX | 1 | 0 | 1 | 1 | 1 | R 7 |
| 0 | 1 | 0 | 0 | 0 | PO | 1 | 1 | 0 | 0 | 0 | R 8 |
| 0 | 1 | 0 | 0 | 1 | PI | 1 | 1 | 0 | 0 | 1 | R 9 |
| 0 | 1 | 0 | 1 | 0 | SIOST | 1 | 1 | 0 | 1 | 0 | R 10 |
| 0 | 1 | 0 | 1 | 1 | IOF | 1 | 1 | 0 | 1 | 1 | R 11 |
| 0 | 1 | 1 | 0 | 0 | PST | 1 | 1 | 1 | 0 | 0 | R 12 |
| 0 | 1 | 1 | 0 | 1 | BSR | 1 | 1 | 1 | 0 | 1 | R 13 |
| 0 | 1 | 1 | 1 | 0 | MSP | 1 | 1 | 1 | 1 | 0 | R 14 |
| 0 | 1 | 1 | 1 | 1 | LSP | 1 | 1 | 1 | 1 | 1 | PINR* |

| SY | | | | | Sel | SY | | | | | Sel |
|---|---|---|---|---|---|---|---|---|---|---|---|
| $C_{14}$ | 15 | 16 | 17 | $C_{18}$ | | $C_{14}$ | 15 | 16 | 17 | $C_{18}$ | |
| 0 | 0 | 0 | 0 | 0 | ROM | 1 | 0 | 0 | 0 | 0 | R 0 |
| 0 | 0 | 0 | 0 | 1 | ARR | 1 | 0 | 0 | 0 | 1 | R 1 |
| 0 | 0 | 0 | 1 | 0 | RAMB | 1 | 0 | 0 | 1 | 0 | R 2 |
| 0 | 0 | 0 | 1 | 1 | ARA | 1 | 0 | 0 | 1 | 1 | R 3 |
| 0 | 0 | 1 | 0 | 0 | RAMA | 1 | 0 | 1 | 0 | 0 | R 4 |
| 0 | 0 | 1 | 0 | 1 | IAR | 1 | 0 | 1 | 0 | 1 | R 5 |
| 0 | 0 | 1 | 1 | 0 | SIY | 1 | 0 | 1 | 1 | 0 | R 6 |
| 0 | 0 | 1 | 1 | 1 | SOY | 1 | 0 | 1 | 1 | 1 | R 7 |
| 0 | 1 | 0 | 0 | 0 | PO | 1 | 1 | 0 | 0 | 0 | R 8 |
| 0 | 1 | 0 | 0 | 1 | PI | 1 | 1 | 0 | 0 | 1 | R 9 |
| 0 | 1 | 0 | 1 | 0 | SIOST | 1 | 1 | 0 | 1 | 0 | R 10 |
| 0 | 1 | 0 | 1 | 1 | IOF | 1 | 1 | 0 | 1 | 1 | R 11 |
| 0 | 1 | 1 | 0 | 0 | PST | 1 | 1 | 1 | 0 | 0 | R 12 |
| 0 | 1 | 1 | 0 | 1 | BSR | 1 | 1 | 1 | 0 | 1 | R 13 |
| 0 | 1 | 1 | 1 | 0 | MSP | 1 | 1 | 1 | 1 | 0 | R 14 |
| 0 | 1 | 1 | 1 | 1 | LSP | 1 | 1 | 1 | 1 | 1 | PINR* |

FIG.13c

FIG.14

| Funct | PM | SELA 1 | SELA 2 | ENA |
|---|---|---|---|---|
| HOLD | $PM_{old}$ | $SELA1_{old}$ | $SELA2_{old}$ | 0 |
| "0" | 1 | 0 | 0 | 1 |
| -ACR | 0 | 0 | 1 | 1 |
| +ACR | 1 | 0 | 1 | 1 |
| $-ACR.2^{-15}$ | 0 | 1 | d.c | 1 |
| $+ACR.2^{-15}$ | 1 | 1 | d.c | 1 |

FIG.14a